(19) Europäisches Patentamt / European Patent Office / Office européen des brevets

(11) **EP 4 005 975 A1**

(12) **EUROPEAN PATENT APPLICATION**
published in accordance with Art. 153(4) EPC

(43) Date of publication:
**01.06.2022 Bulletin 2022/22**

(21) Application number: **20905582.1**

(22) Date of filing: **17.12.2020**

(51) International Patent Classification (IPC):
*C01B 25/37* (2006.01)  *C01B 25/45* (2006.01)

(52) Cooperative Patent Classification (CPC):
**C01B 25/37; C01B 25/45**

(86) International application number:
**PCT/JP2020/047119**

(87) International publication number:
**WO 2021/132008 (01.07.2021 Gazette 2021/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.12.2019 JP 2019232514**

(71) Applicant: **Daiichi Kigenso Kagaku Kogyo Co., Ltd.**
**Osaka-shi, Osaka 541-0041 (JP)**

(72) Inventor: **KANAZASHI,Ken**
**Osaka-shi, Osaka 559-0025 (JP)**

(74) Representative: **Cabinet Beau de Loménie**
**158, rue de l'Université**
**75340 Paris Cedex 07 (FR)**

(54) **ZIRCONIUM PHOSPHATE AND SLURRY**

(57) A zirconium phosphate represented by $M1Zr_2(M2PO_4)_a(PO_4)_b \cdot nH_2O$ (M1 and M2 are monovalent cations, and may be the same or different from each other; a and b are numbers satisfying $0.3 < a \leq 1.8$, $3.1 \leq (a + b) \leq 3.6$, and $2a + 3b = 9$; and n is a number satisfying $0 \leq n \leq 2$.).

**Fig.1**

**Description**

TECHNICAL FIELD

The present invention relates to a zirconium phosphate and a slurry.

BACKGROUND ART

Conventionally, as a zirconium phosphate, there is $MZr_2(PO_4)_3$ having a configuration containing three phosphorus atoms. Conventionally, as the zirconium phosphate, there is also a zirconium phosphate having a configuration containing two phosphorus atoms (for example, $MZrH(PO_4)_2$).

As a method for producing a zirconium phosphate, there are a solid phase method (firing method) and a wet method, but in the solid phase method, the particle size of the zirconium phosphate becomes coarse, and as a result, the specific surface area of the zirconium phosphate becomes low, which makes it difficult to form a slurry. Patent Documents 1 to 4 disclose the wet method, for example.

Patent Literature 1 discloses $A_xNH_{4(1-x)}Zr_2(PO_4)_3 \cdot nH_2O$ (where A represents an alkali metal ion; X is a number satisfying $0 < X < 1$; and n is a number satisfying $0 \leq n \leq 2$.).

Patent Document 2 discloses $AZr_2(PO_4)_3 \cdot nH_2O$ (where, A represents at least one of an ammonium ion or an alkali metal ion, and n is a number satisfying $0 \leq n \leq 2$.).

Patent Document 3 discloses $HnR_{1-n}Zr_2(PO_4)_3 \cdot mH_2O$ (where R represents $NH_4$ or an amine cation; and $0 \leq n \leq 1$ and $0 \leq m \leq 2$ are set.).

Patent Document 4 discloses $M_aZr_b(PO_4)_3 \cdot nH_2O$ (where M is at least one ion selected from an alkali metal ion, a hydrogen ion, and an oxonium ion; a and b are numbers satisfying $1.75 < b < 2$ and $a + 4b = 9$; and n is 2 or less.) as a zirconium phosphate.

In the zirconium phosphate of Patent Document 4, b is less than 2, but a is more than 1 because of $a + 4b = 9$. The reason why a is more than 1 is that the number of M"s, which are monovalent cations, is increased in order to adjust a charge as the number of Zr's is smaller than 2, but the number of phosphorus atoms, which are anions, is fixed at 3.

PRIOR ART DOCUMENTS

PATENT DOCUMENT

Patent Document 1: JP-A-06-48713
Patent Document 2: JP-A-05-17112
Patent Document 3: JP-A-60-239313
Patent Document 4: JP-A-2006-306677

DISCLOSURE OF THE INVENTION

PROBLEMS TO BE SOLVED BY THE INVENTION

As described above, a zirconium phosphate in which the number of phosphorus atoms is more than 3 and less than 4 has not been conventionally known. That is, a zirconium phosphate containing 3.1 to 3.6 phosphorus atoms with respect to 2 zirconium atoms (equivalent) has not been known.

An object of the present invention is to provide a zirconium phosphate containing 3.1 to 3.6 phosphorus atoms with respect to 2 zirconium atoms. Another object of the present invention is to provide a slurry in which the zirconium phosphate is dispersed in an aqueous solvent.

MEANS FOR SOLVING THE PROBLEMS

The present inventors have diligently studied a zirconium phosphate. As a result, the present inventors have succeeded in creating a zirconium phosphate containing 3.1 to 3.6 phosphorus atoms with respect to 2 zirconium atoms (equivalent), and have completed the present invention.

That is, a zirconium phosphate according to the present invention is represented by the following formula [1] :

$$M1Zr_2(M2PO_4)_a(PO_4)_b \cdot nH_2O \qquad [1]$$

wherein:

M1 and M2 are monovalent cations, and may be the same or different from each other;
a and b are numbers satisfying $0.3 < a \leq 1.8$, $3.1 \leq (a + b) \leq 3.6$, and $2a + 3b = 9$; and
n is a number satisfying $0 \leq n \leq 2$.

According to the above configuration, in the formula [1], (a + b) is 3.1 or more and 3.6 or less, and the zirconium phosphate contains 3.1 to 3.6 phosphorus atoms with respect to 2 zirconium atoms. Such a zirconium phosphate is a novel zirconium phosphate that has not been conventionally known.

In the above configuration, it is preferable that the zirconium phosphate contains a rhombohedral crystal as a crystal structure, and a proportion of the rhombohedral crystal is more than 90% with respect to the entire zirconium phosphate.

When the zirconium phosphate contains a rhombohedral crystal as a crystal structure, and a proportion of the rhombohedral crystal is more than 90% with respect to the entire zirconium phosphate, a zirconium phosphate powder having a fine grain size and a relatively uniform particle size is likely to be obtained. This is also clear from Examples.

Here, when more than 3.6 phosphorus atoms are contained with respect to 2 zirconium atoms, the crystal structure contains a large amount of monoclinic crystals, which makes it difficult to make the ratio of the rhombohedral crystal more than 90% with respect to the entire zirconium phosphate.

Meanwhile, according to the above configuration, although a large amount of rhombohedral crystal is contained as the crystal structure, the content of the phosphorus atoms can be made larger than before. The fact that the content of the phosphorus atoms is large means that the contents of phosphate ions ($PO_4{}^{3-}$) and hydrogen phosphate ions ($HPO_4{}^{2-}$) are large. Since the phosphate ions ($PO_4{}^{3-}$) and the hydrogen phosphate ions ($HPO_4{}^{2}$) have high affinity for water, the dispersibility of a zirconium phosphate having high contents of the phosphate ions ($PO_4{}^{3-}$) and hydrogen phosphate ions ($HPO_4{}^{2-}$) in an aqueous solvent is improved.

As described above, according to the above configuration, the rhombohedral crystal is contained in an amount of more than 90%, and the number of the phosphorus atoms is 3.1 or more, whereby the particle size can be made fine, and the dispersibility of the zirconium phosphate in the aqueous solvent can be enhanced. As a result, even when the zirconium phosphate is dispersed at a high concentration in the aqueous solvent, the zirconium phosphate can be less likely to aggregate.

In the above configuration, the particle diameter $D_{90}$ is preferably 1.5 $\mu$m or less.

When the particle diameter $D_{90}$ is 1.5 $\mu$m or less, a zirconium phosphate having a fine particle size can be provided.

In general, particles (powders) are more likely to aggregate as the particle size is smaller, whereby the dispersibility of the particles in a solvent is reduced. Meanwhile, according to the above configuration, the number of the phosphorus atoms is 3.1 or more, and affinity with water is high, whereby even when the particle diameter $D_{90}$ is as fine as 1.5 $\mu$m or less, a zirconium phosphate having high dispersibility in an aqueous solvent can be provided.

In the above configuration, a difference between the particle diameter $D_{90}$ and a particle diameter $D_{10}$ is preferably 1 $\mu$m or less.

When the difference between the particle diameter $D_{90}$ and the particle diameter $D_{10}$ is 1 $\mu$m or less, the particle size can be said to be relatively uniform. Therefore, it is not necessary to perform classification or the like, which makes it possible to provide a zirconium phosphate having stable quality.

In the above configuration, a difference between the particle diameter $D_{90}$ and a particle diameter $D_{10}$ is preferably 0.05 $\mu$m or more.

When the difference between the particle diameter $D_{90}$ and the particle diameter $D_{10}$ is 0.05 $\mu$m or more, a zirconium phosphate having a uniform particle diameter can be provided.

In the above configuration, it is preferable that when the zirconium phosphate is dispersed at a solid content concentration of 50 mass% in pure water for measurement with a particle gauge, no linear mark is present at a place of 2.5 $\mu$m or more.

The fact that when the zirconium phosphate is dispersed at a solid content concentration of 50 mass% in pure water for measurement with a particle gauge, no linear mark is present at a place of 2.5 $\mu$m or more means that even when the zirconium phosphate is dispersed at a solid content concentration of 50 mass% in pure water, aggregates (coarse grains) of 2.5 $\mu$m or more are not present. Therefore, according to the above configuration, even if particles (powders) are dispersed at a high concentration in an aqueous solvent, the particles hardly aggregate, and can be almost uniformly dispersed.

A slurry according to the present invention contains: an aqueous solvent; and the zirconium phosphate dispersed in the aqueous solvent.

According to the above configuration, it is possible to provide a novel slurry in which a zirconium phosphate containing 3.1 to 3.6 phosphorus atoms with respect to 2 zirconium atoms is dispersed in an aqueous solvent.

In the configuration, it is preferable that the zirconium phosphate is dispersed at a solid content concentration of 50 mass% or more in the aqueous solvent, and the slurry has no linear mark at a place of 2.5 $\mu$m or more as measured by a particle gauge.

The fact that the zirconium phosphate is dispersed at a solid content concentration of 50 mass% or more in the aqueous solvent, and the slurry has no linear mark at a place of 2.5 $\mu$m or more as measured by a particle gauge means that the slurry has no aggregates (coarse grains) of 2.5 $\mu$m or more. Therefore, according to the above configuration, it is possible to provide a slurry in which a zirconium phosphate is substantially uniformly dispersed at a high concentration in an aqueous solvent.

EFFECT OF THE INVENTION

According to the present invention, it is possible to provide a zirconium phosphate containing 3.1 to 3.6 phosphorus atoms with respect to 2 zirconium atoms (equivalent). It is possible to provide a slurry in which the zirconium phosphate is dispersed in an aqueous solvent.

BRIEF DESCRIPTION OF THE DRAWINGS

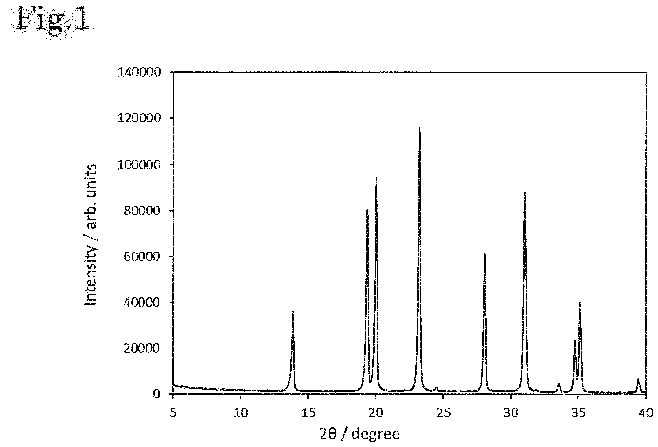

Fig. 1 is an X-ray diffraction spectrum of a zirconium phosphate of Example 5.

MODE FOR CARRYING OUT THE INVENTION

Hereinafter, embodiments of the present invention will be described. However, the present invention is not limited only to these embodiments. In the present specification, zirconium constituting a zirconium phosphate contains inevitable impurities containing hafnium as a part thereof. In the present specification, the zirconium phosphate may contain impurities such as silica and titania other than hafnium in an amount of 1 mass% or less for manufacturing reasons or the like.

[Zirconium Phosphate]

A zirconium phosphate according to the present embodiment is represented by the following formula [1]:

$$M1Zr_2(M2PO_4)_a(PO_4)_b \cdot nH_2O \qquad [1]$$

In the formula [1], M1 and M2 are monovalent cations, and may be the same as or different from each other.

The monovalent cation is not particularly limited as long as it is a monovalent cation, and examples thereof include a hydrogen ion, an alkali metal ion, a transition metal ion, and a molecular ion having a monovalent charge. These may be used alone or in combination of two or more thereof. Examples of the alkali metal ion include Li, Na, K, Rb, Cs, Fr, and Ag. Examples of the molecular ion having a monovalent charge include an ammonium ion ($NH_4^+$) and an oxonium ion $OH_3^+$. The molecular ion having a monovalent charge refers to a molecule having a monovalent (+1) charge as a whole and composed of two or more atoms. Among them, the monovalent cation is preferably a hydrogen ion or an ammonium ion from the viewpoint of easy ion exchange.

In the formula [1], a and b are numbers satisfying $0.3 < a \leq 1.8$, $3.1 \leq (a + b) \leq 3.6$, and $2a + 3b = 9$.

a + b is not particularly limited as long as it is 3.1 or more and 3.6 or less. From the viewpoint of improving the dispersibility of the zirconium phosphate in an aqueous solvent, a + b is preferably larger, and is, for example, preferably 3.2 or more, and more preferably 3.21 or more. From the viewpoint of containing a large amount of rhombohedral crystals, a + b is preferably smaller, and is, for example, preferably 3.55 or less, and more preferably 3.5 or less.

Examples of a method for controlling a + b within the range of 3.1 or more and 3.6 or less include adjusting the mixing ratio, mixing order, and mixing conditions (temperature, pressure, time) of raw materials for producing the zirconium phosphate, and the like.

a is not particularly limited as long as it is more than 0.3 and 1.8 or less. From the viewpoint of the dispersibility, a is preferably as larger, and is, for example, preferably 0.31 or more, and more preferably 0.35 or more. a is preferably smaller from the viewpoint of the particle size, and is, for example, preferably 1.79 or less, and more preferably 1.75 or less.

In the formula [1], n is a number satisfying $0 \leq n \leq 2$. n is not particularly limited as long as it is 0 or more and 2 or less. n is preferably larger, for example, preferably 0.05 or more, and more preferably 0.1 or more. n is preferably smaller, and is, for example, preferably 1.95 or less, and more preferably 1.8 or less.

In the zirconium phosphate according to the present embodiment, in the formula [1], (a + b) is 3.1 or more and 3.6 or less, and the zirconium phosphate contains 3.1 to 3.6 phosphorus atoms with respect to 2 zirconium atoms. Such a zirconium phosphate is a novel zirconium phosphate that has not been conventionally known.

The zirconium phosphate preferably contains a rhombohedral crystal as a crystal structure. The proportion of the rhombohedral crystal is preferably more than 90%, more preferably 92% or more, and still more preferably 95% or more with respect to the entire zirconium phosphate. The proportion of the rhombohedral crystal is preferably larger, but can be, for example, 100% or less, and 99% or less with respect to the entire zirconium phosphate. When the proportion of the rhombohedral crystal is 90% or more with respect to the entire zirconium phosphate, a zirconium phosphate powder having a fine grain size and a relatively uniform particle size is likely to be obtained. The proportion of the rhombohedral crystal refers to a value obtained by a method described in Examples.

Examples of a method for controlling the proportion of the rhombohedral crystal to 90% or more include adjusting the mixing ratio, mixing order, and mixing conditions (temperature, pressure, time) of raw materials for producing the zirconium phosphate, and the like.

(Particle Diameter $D_{90}$)

The particle diameter $D_{90}$ of the zirconium phosphate is preferably 1.5 $\mu$m or less from the viewpoint of providing a zirconium phosphate having a fine particle size. The particle diameter $D_{90}$ is more preferably 1.39 $\mu$m or less, still more preferably 0.46 $\mu$m or less, and particularly preferably 0.28 $\mu$m or less.

The zirconium phosphate has 3.1 or more phosphorus atoms, and has high affinity for water. Therefore, when the particle diameter $D_{90}$ is 1.5 $\mu$m or less, a zirconium phosphate having a fine particle size and high dispersibility in an aqueous solvent can be provided. The particle diameter $D_{90}$ is preferably smaller from the viewpoint of providing a zirconium phosphate having a small particle size, and can be, for example, 0.05 $\mu$m or more or 0.1 $\mu$m or more or the like.

(Difference between Particle Diameter $D_{90}$ and Particle Diameter $D_{10}$)

The difference between the particle diameter $D_{90}$ and the particle diameter $D_{10}$, that is, [particle diameter $D_{90}$] - [particle diameter $D_{10}$] is preferably 1 $\mu$m or less from the viewpoint of providing a zirconium phosphate having a relatively uniform particle size. The difference is more preferably 0.8 $\mu$m or less, still more preferably 0.35 $\mu$m or less, and particularly preferably 0.11 $\mu$m or less. When the difference is 1 $\mu$m or less, it is not necessary to perform classification or the like, which makes it possible to provide a zirconium phosphate having stable quality. The difference is preferably 0.05 $\mu$m or more, and more preferably 0.08 $\mu$m or more.

(Particle Diameter $D_{10}$)

The particle diameter $D_{10}$ of the zirconium phosphate is preferably smaller from the viewpoint of providing a zirconium phosphate having a fine particle size, but is not particularly limited. The particle diameter $D_{10}$ can be, for example, preferably 0.59 $\mu$m or less, more preferably 0.24 $\mu$m or less, and still more preferably 0.11 $\mu$m or less. The particle diameter $D_{10}$ can be, for example, preferably 0.01 $\mu$m or more, and more preferably 0.05 $\mu$m or more.

(Particle Diameter $D_{50}$)

The particle diameter $D_{50}$ of the zirconium phosphate is preferably smaller from the viewpoint of providing a zirconium phosphate having a fine particle size, but is not particularly limited. The particle diameter $D_{50}$ can be, for example, 0.93 $\mu$m or less, preferably 0.45 $\mu$m or less, and more preferably 0.22 $\mu$m or less. The particle diameter $D_{50}$ can be, for example, 0.01 $\mu$m or more, and preferably 0.05 $\mu$m or more.

The particle diameter $D_{10}$, the particle diameter $D_{50}$, and the particle diameter $D_{90}$ refer to values obtained by a method described in Examples. The particle diameter $D_{10}$, the particle diameter $D_{50}$, and the particle diameter $D_{90}$ described in the present specification are measured on a volume basis. The particle diameter $D_{10}$ is a particle diameter corresponding to a cumulative value of 10% from a minimum particle size value measured by a laser diffraction method. The particle diameter $D_{50}$ is a particle diameter corresponding to a cumulative value of 50% from a minimum particle size value measured by a laser diffraction method. The particle diameter $D_{90}$ is a particle diameter corresponding to a cumulative value of 90% from a minimum particle size value measured by a laser diffraction method.

It is preferable that when the zirconium phosphate is dispersed at a solid content concentration of 50 mass% in pure water for measurement with a particle gauge, no linear mark is present at a place of 2.5 $\mu$m or more. The fact that when the zirconium phosphate is dispersed at a solid content concentration of 50 mass% in pure water for measurement with a particle gauge, no linear mark is present at a place of 2.5 $\mu$m or more means that even when the zirconium phosphate is dispersed at a solid content concentration of 50 mass% in pure water, aggregates of 2.5 $\mu$m or more are not present. Therefore, even if particles (powders) are dispersed at a high concentration in an aqueous solvent, the particles hardly aggregate, and can be almost uniformly dispersed.

The details of the measurement method using the particle gauge are based on a method described in Examples.

The zirconium phosphate according to the present embodiment has been described above.

[Method for Producing Zirconium Phosphate]

Hereinafter, an example of a method for producing a zirconium phosphate will be described. However, the method for producing a zirconium phosphate according to the present invention is not limited to the following examples.

A method for producing a zirconium phosphate according to the present embodiment includes: a step A of preparing an aqueous solution containing a zirconium compound, a compound having two or more carboxyl groups, and a phosphoric acid compound at a predetermined ratio; and

a step B of heating the aqueous solution.

In the method for producing a zirconium phosphate according to the present embodiment, first, an aqueous solution containing a zirconium compound, a compound having two or more carboxyl groups, and a phosphoric acid compound at a predetermined ratio is prepared (step A).

Examples of the zirconium compound include zirconium halides such as zirconium oxychloride, zirconium hydroxychloride, zirconium tetrachloride and zirconium bromide; zirconium salts of mineral acids such as zirconium sulfate, basic zirconium sulfate, and zirconium nitrate; zirconium salts of organic acids such as zirconyl acetate and zirconyl formate; and zirconium complex salts such as zirconium ammonium carbonate, sodium zirconium sulfate, zirconium ammonium acetate, sodium zirconium oxalate, and zirconium ammonium citrate. Among these compounds, zirconium oxychloride and zirconium sulfate and the like are more preferable from the viewpoint of productivity.

Examples of the compound having two or more carboxyl groups include aliphatic dibasic acids and salts thereof such as oxalic acid, sodium oxalate, sodium hydrogen oxalate, ammonium oxalate, ammonium hydrogen oxalate, lithium oxalate, maleic acid, malonic acid, succinic acid, and salts thereof; and aliphatic oxyacids and salts thereof such as citric acid, ammonium citrate, tartaric acid, and malic acid. Among these, oxalic acid, and a sodium salt and an ammonium salt thereof are more preferable.

Among the zirconium compounds, zirconium compounds of carboxylic acids having two or more carboxyl groups, such as sodium zirconium oxalate and ammonium zirconium citrate, form a complex having excellent stability in a mixed liquid similarly to the compound having two or more carboxyl groups, and therefore even when the zirconium compounds of carboxylic acids are used as the zirconium compound, the carboxyl group is calculated as $C_2O_4$ in the mixed liquid.

Examples of the phosphoric acid compound include alkali metal salts and ammonium salts of orthophosphoric acids such as phosphoric acid, monosodium phosphate, disodium phosphate, and trisodium phosphate; and alkali metal salts and ammonium salts of condensed phosphoric acids having at least one P-O-P bond, such as metaphosphoric acid and pyrophosphoric acid. Among these, alkali metal salts and ammonium salts of orthophosphoric acids are more preferable.

The mixing ratio of the zirconium compound, the compound having two or more carboxyl groups, and the phosphoric acid compound is preferably within the range of 0.75 to 1.2 : 0.75 to 1.2 : 1.3 to 1.7 in terms of molar ratio.

When the mixing ratio of the zirconium compound, the compound having two or more carboxyl groups, and the phosphoric acid compound is within the above numerical range, a zirconium phosphate containing a large amount of rhombohedral crystals and containing a large amount of phosphate ions and hydrogen phosphate ions is likely to be obtained.

In particular, the present inventors have found that the obtained crystal phase varies depending on the content ratio of the compound having two or more carboxyl groups (in particular, oxalic acid). In the production of the zirconium phosphate, the mixing ratio of the compound having two or more carboxyl groups is within the above numerical range, whereby a large amount of rhombohedral crystals can be contained, and the content of phosphorus atoms can be increased.

In the step A, the mixing order of the raw materials is not particularly limited, but it is preferable that a phosphoric acid compound is mixed with an aqueous solution of a zirconium compound, and then a compound having two or more carboxyl groups is mixed with the mixture.

When a phosphoric acid compound is first mixed with an aqueous solution of a zirconium compound, and then a compound having two or more carboxyl groups is mixed with the mixture, rhombohedral crystals are likely to be obtained. When a compound having two or more carboxyl groups is first mixed with an aqueous solution of a zirconium compound, monoclinic crystals are likely to be formed at the time of mixing a phosphoric acid compound, whereby rhombohedral crystals are less likely to be obtained.

After the above-described raw materials are mixed, the mixture may be pH-adjusted as necessary. The pH is preferably within the range of 1.0 or more and 4.0 or less, more preferably within the range of 1.5 or more and 3.5 or less, and still more preferably within the range of 2.0 or more and 3.0 or less. By adjusting the pH within the above numerical range, the reaction rate of the zirconium phosphate can be controlled.

Examples of a pH adjuster for pH adjustment include mineral acids such as hydrochloric acid, sulfuric acid, and nitric acid; ammoniums such as ammonium hydroxide (ammonia water), ammonium hydrogen carbonate, sodium hydroxide, potassium hydroxide, and sodium carbonate; and hydroxides and carbonates of alkali metals.

Next, the obtained aqueous solution is heated (step B). A heating temperature is not particularly limited, and is, for example, 90°C or higher, preferably 100°C or higher, and more preferably 150°C or higher from the viewpoint that rhombohedral crystals are more likely to be obtained as the temperature is higher. The upper limit of the heating temperature is not particularly limited, and is, for example, 200°C or lower, preferably 190°C or lower, and more preferably 180°C or lower.

The heating step (step B) may be performed under normal pressure (around standard atmospheric pressure (101.33 kPa)) or under a pressurized condition. From the viewpoint of being likely to obtain rhombohedral crystals, the heating step is preferably performed under a pressurized condition. Examples of the pressurized condition in the case of pressurization include 0.1 MPa or more, 0.2 MPa or more, and 0.5 MPa or more. The upper limit of the pressurized condition is not particularly limited, and is, for example, 1.0 MPa or less, preferably 0.9 MPa or less, and more preferably 0.8 MPa or less.

A time for performing the heating step (step B) can greatly vary depending on the type of raw materials (that is, the reactivity of the raw materials), the blending ratio of the raw materials, the concentration, temperature, and pH of an aqueous solution, and the desired crystallinity of a reaction product, and the like, but for example, in the case of a temperature of 150°C, the time is 1 hour or more (a large amount of unreacted components), preferably 2 hours or more, and more preferably 3 hours or more (almost total crystallization), and the like.

After the heating step, the temperature and the pressure are usually returned to room temperature (around 25°C) and normal pressure.

Next, if necessary, the zirconium phosphate according to the present embodiment can be obtained by thoroughly washing with water, removing excessive ions from the obtained precipitate, and then drying. A drying condition is not particularly limited, and preferably within the range of 50°C to 150°C.

[Slurry]

A slurry according to the present embodiment is obtained by dispersing the zirconium phosphate in an aqueous solvent. That is, the slurry according to the present embodiment contains an aqueous solvent and the zirconium phosphate dispersed in the aqueous solvent.

The aqueous solvent is not particularly limited as long as it contains water in an amount of 50 mass% or more (more preferably 55 mass% or more, and still more preferably 60 mass% or more). The solvent other than water that can be contained in the aqueous solvent is not particularly limited, and examples thereof include alcohols having 1 to 4 carbon atoms, ethanol, methanol, butanol, and propanol. Among them, the aqueous solvent is preferably pure water.

A method for dispersing the zirconium phosphate in the aqueous solvent is not particularly limited, and the zirconium phosphate (powder) may be added to the aqueous solvent, followed by stirring. The stirring condition is not particularly limited, and the stirring may be performed to such an extent that no solid content is visually observed at normal temperature and pressure.

In the slurry, the zirconium phosphate is dispersed in the aqueous solvent at a solid content concentration of preferably 50 mass% or more, more preferably 55 mass% or more, and still more preferably 60 mass% or more.

The slurry preferably has no linear mark at a place of 2.5 $\mu$m or more as measured with a particle gauge.

The fact that the zirconium phosphate is dispersed at a solid content concentration of 50 mass% or more in the aqueous solvent, and the slurry has no linear mark at a place of 2.5 $\mu$m or more as measured by a particle gauge means that the slurry has no aggregates (coarse grains) of 2.5 $\mu$m or more. Therefore, according to the slurry, it is possible to provide the slurry in which the zirconium phosphate is substantially uniformly dispersed at a high concentration in the aqueous solvent.

EXAMPLES

Hereinafter, the present invention will be described in detail with reference to Examples, but the present invention is not limited to the following Examples as long as the gist thereof is not deviated. Zirconium phosphates and slurries in Examples and Comparative Examples contain 1.3 to 2.5 mass% of hafnium as an inevitable impurity in terms of oxide with respect to zirconium (calculated by the following formula (X)). The zirconium phosphates and the slurries in Examples and Comparative Examples may contain silica and titania as impurities in an amount of 0.1 mass% or less other than hafnium for manufacturing reasons or the like.

```
<Formula (X)>

([Mass of hafnium oxide]/([mass of zirconium oxide] +

[mass of hafnium oxide])) × 100 (%)
```

The maximum value and the minimum value of the content of each component shown in the following Examples should be considered as a preferable minimum value and a preferable maximum value of the present invention regardless of the content of other components.

In addition, the maximum value and the minimum value of the measured values shown in the following Examples should be considered to be the preferred minimum value and maximum value of the present invention regardless of the content (composition) of each component.

<Production of Zirconium Phosphate>

(Example 1)

In 300 ml of pure water, 0.1 mol of zirconium oxychloride $ZrOCl_2$ was dissolved. Next, 0.15 mol of monosodium phosphate ($NaH_2PO_4$) was mixed with the solution. Next, 0.1 mol of oxalic acid (HOOC-COOH) was charged as an aqueous solution. The concentration of the oxalic acid aqueous solution obtained by charging was 5 mass%. Next, the pH was adjusted to 2.7 using 25 mass% aqueous ammonia. The operations so far were performed at room temperature (25°C) under normal pressure.

Next, the mixture was stirred for 3 hours under pressure (pressure: 0.5 MPa) at 150°C. Thereafter, the temperature and the pressure were returned to room temperature (25°C) and normal pressure.

Next, the resulting precipitate was thoroughly washed with water to remove excessive ions. Thereafter, drying was performed at 100°C. As described above, a zirconium phosphate according to Example 1 was obtained.

(Example 2)

A zirconium phosphate according to Example 2 was obtained in the same manner as in Example 1 except that monoammonium phosphate ($NH_4H_2PO_4$) was used in place of monosodium phosphate.

(Example 3)

A zirconium phosphate according to Example 3 was obtained in the same manner as in Example 1 except that the addition amount of oxalic acid was changed to 0.075 mol, and stirring was performed at 98°C under normal pressure for 14 hours.

(Example 4)

The zirconium phosphate obtained in Example 1 was heated at 650°C for 5 hours to obtain a zirconium phosphate according to Example 4.

(Example 5)

A zirconium phosphate according to Example 5 was obtained in the same manner as in Example 1 except that a 25 mass% aqueous sodium hydroxide solution was used in place of 25 mass% aqueous ammonia.

(Example 6)

A zirconium phosphate according to Example 6 was obtained in the same manner as in Example 1 except that the addition amount of oxalic acid was changed to 0.12 mol.

(Example 7)

0.1 mol of a zirconium phosphate powder obtained in Example 4 was weighed. Next, 0.05 mol of lithium nitrate ($LiNO_3$) was mixed in a powder state. Next, the mixture was heated at 500°C for 3 hours to obtain a zirconium phosphate according to Example 7.

(Example 8)

A zirconium phosphate according to Example 8 was obtained in the same manner as in Example 7 except that silver nitrate ($AgNO_3$) was used in place of lithium nitrate.

(Comparative Example 1)

0.1 mol of oxalic acid dihydrate (($COOH)_2 \cdot 2H_2O$) and 0.195 mol of zirconium oxychloride octahydrate ($ZrOCl_2 \cdot 8H_2O$) were dissolved in 300 ml of pure water. Next, 0.3 mol of phosphoric acid ($H_3PO_4$) was added with stirring. Next, the pH was adjusted to 2.7 using 25 mass% aqueous ammonia. The operations so far were performed at room temperature (25°C) under normal pressure.
Next, the mixture was stirred for 3 hours under pressure (pressure: 0.5 MPa) at 150°C. Thereafter, the temperature and the pressure were returned to room temperature (25°C) and normal pressure.
Next, the resulting precipitate was thoroughly washed with water to remove excessive ions. Thereafter, drying was performed at 100°C. As described above, a zirconium phosphate according to Comparative Example 1 was obtained.

(Comparative Example 2)

0.1 mol of oxalic acid dihydrate (($COOH)_2 \cdot 2H_2O$) and 0.195 mol of zirconium oxychloride octahydrate ($ZrOCl_2 \cdot 8H_2O$) were dissolved in 300 ml of pure water. Next, 0.3 mol of phosphoric acid ($H_3PO_4$) was added with stirring. Next, the pH was adjusted to 2.7 using a 25 mass% aqueous sodium hydroxide solution. The operations so far were performed at room temperature (25°C) under normal pressure.
Next, the mixture was stirred at 98°C under normal pressure for 14 hours. Thereafter, the temperature was returned to room temperature (25°C).
Next, the resulting precipitate was thoroughly washed with water to remove excessive ions. Thereafter, drying was performed at 100°C. As described above, a zirconium phosphate according to Comparative Example 2 was obtained.

(Comparative Example 3)

A zirconium phosphate according to Comparative Example 3 was obtained in the same manner as in Comparative Example 1 except that stirring was performed at 98°C under normal pressure for 24 hours in place of performing stirring at 150°C under pressure (pressure: 0.5 MPa) for 3 hours.

(Comparative Example 4)

A zirconium phosphate according to Comparative Example 4 was obtained in the same manner as in Example 1 except that the addition amount of oxalic acid was changed to 0.15 mol.
The zirconium phosphate obtained in each of Examples and Comparative Examples was in the form of powder. In analysis described below, powders obtained by drying the zirconium phosphates obtained in Examples and Comparative Examples at 110°C for 3 hours were used.

[Identification of Crystal Phases]

X-ray diffraction spectra of the zirconia powders of Examples and Comparative Examples were obtained using an X-ray diffractometer ("RINT2500" manufactured by Rigaku Corporation). The measurement conditions were set as follows.

<Measurement conditions>

Measuring apparatus: X-ray diffractometer (RINT2500, manufactured by Rigaku Corporation)
Radiation source: CuK$\alpha$ radiation source
Tube voltage: 50 kV
Tube current: 300 mA
Scanning speed: $2\theta = 5$ to 60°: 4°/min

Then, the crystal phases were identified from the X-ray diffraction spectrum. The phase ratio of each crystal phase contained in the zirconium phosphate was determined by the following calculation formula. The results are shown in Table 1. For Example 5, an X-ray diffraction spectrum is shown in Fig. 1.

```
    Rhombohedral phase rate (%) = Ir(116)/(Ir(116) +

Im(001) + Ic(111)) × 100

      Cubic phase rate (%) = (100% - rhombohedral phase

rate (%)) × ((Ic(111))/(Im(001) + Ic(111)) × 100

      Monoclinic phase rate (%) = (100% - rhombohedral

phase rate (%)) × (Im(001))/(Im(001) + Ic(111)) × 100
```

A distinction among the rhombohedral phase, the cubic phase, and the monoclinic phase of the zirconium phosphate was made in the vicinity of $2\theta = 5$ to $35°$ in the XRD spectrum. A distinction between the cubic phase and the monoclinic phase was made in the vicinity of $2\theta = 5$ to $15°$ in the XRD spectrum.

Here, Ir(116) is the diffraction intensity of (116) of the rhombohedral phase, Ic(111) is the diffraction intensity of (111) of the cubic phase, and Im(001) is the diffraction intensity of (001) of the monoclinic phase.

[Measurement of Particle Diameter $D_{10}$, Particle Diameter $D_{50}$, and Particle Diameter $D_{90}$]

Into a 50 ml beaker, 0.15 g of the zirconium phosphate (powder) of each of Examples and Comparative Examples and 40 ml of a 0.2% aqueous sodium hexametaphosphate solution were charged, dispersed with a tabletop ultrasonic cleaner "W-113" (manufactured by Honda Electronics Corporation) for 5 minutes, and then charged into an apparatus (laser diffraction type particle size distribution measuring apparatus ("LA-950" manufactured by Shimadzu Corporation), to measure a particle diameter $D_{10}$, a particle diameter $D_{50}$ (median diameter), and a particle diameter $D_{90}$. The results are shown in Table 1.

[Table 1]

| | | Example 1 | Example 2 | Example 3 | Example 4 | Example 5 | Example 6 | Example 7 | Example 8 |
|---|---|---|---|---|---|---|---|---|---|
| Crystal phases | Rhombohedral phase rate (%) | 100 | 100 | 91 | 100 | 100 | 92 | 100 | 100 |
| | Cubic phase rate (%) | 0 | 0 | 9 | 0 | 0 | 0 | 0 | 0 |
| | Monoclinic phase rate (%) | 0 | 0 | 0 | 0 | 0 | 8 | 0 | 0 |
| Particle diameter | Particle diameter $D_{10}$ (μm) | 0.17 | 0.11 | 0.21 | 0.24 | 0.59 | 0.42 | 0.34 | 0.33 |
| | Particle diameter $D_{50}$ (μm) | 0.22 | 0.32 | 0.45 | 0.33 | 0.93 | 0.83 | 0.52 | 0.51 |
| | Particle diameter $D_{90}$ (μm) | 0.28 | 0.46 | 1.14 | 0.46 | 1.39 | 1.39 | 0.84 | 0.80 |
| | [Particle diameter $D_{90}$] − [Particle diameter $D_{10}$] (μm) | 0.11 | 0.35 | 0.93 | 0.22 | 0.80 | 0.97 | 0.50 | 0.47 |

| | | Comparative Example 1 | Comparative Example 2 | Comparative Example 3 | Comparative Example 4 |
|---|---|---|---|---|---|
| Crystal phases | Rhombohedral phase rate (%) | 100 | 100 | 75 | 0 |
| | Cubic phase rate (%) | 0 | 0 | 25 | 0 |
| | Monoclinic phase rate (%) | 0 | 0 | 0 | 100 |
| Particle diameter | Particle diameter $D_{10}$ (μm) | 0.27 | 0.89 | 0.53 | 4.72 |
| | Particle diameter $D_{50}$ (μm) | 0.37 | 1.48 | 1.64 | 7.35 |
| | Particle diameter $D_{90}$ (μm) | 0.50 | 2.17 | 4.22 | 11.24 |
| | [Particle diameter $D_{90}$] − [Particle diameter $D_{10}$] (μm) | 0.23 | 1.28 | 3.69 | 6.52 |

[Analysis of Composition of Zirconium Phosphate]

The composition (in terms of oxide) of the zirconium phosphate prepared in each of Examples and Comparative Examples was analyzed using ICP-AES ("ULTIMA-2" manufactured by HORIBA, Ltd.).

As a result, the composition of the zirconium phosphate prepared in each of Examples and Comparative Examples was found to be as follows.

Example 1: $(NH_4)Zr_2(NH_4PO_4)_{1.5}(PO_4)_2 \cdot 2H_2O$
Example 2: $(NH_4)Zr_2(NH_4PO_4)_{1.5}(PO_4)_2 \cdot 2H_2O$
Example 3: $(NH_4)Zr_2(NH_4PO_4)_{0.6}(PO_4)_{2.6} \cdot 2H_2O$
Example 4: $HZr_2(HPO_4)_{1.5}(PO_4)_2 \cdot 0.1H_2O$
Example 5: $NaZr_2(NaPO_4)_{0.6}(PO_4)_{2.6} \cdot 1.2H_2O$
Example 6: $(NH_4)Zr_2(NH_4PO_4)_{1.8}(PO_4)_{1.8} \cdot 2H_2O$
Example 7: $LiZr_2(HPO_4)_{1.5}(PO_4)_2 \cdot 0.1H_2O$
Example 8: $AgZr_2(HPO_4)_{1.5}(PO_4)_2 \cdot 0.1H_2O$
Comparative Example 1: $(NH_4)_{0.85}Zr_2(PO_4)_{2.95} \cdot 2H_2O$
Comparative Example 2: $Na_{0.85}Zr_2(PO_4)_{2.95} \cdot 2H_2O$
Comparative Example 3: $(NH_4)_{0.85}Zr_2(PO_4)_{2.95} \cdot 2H_2O$
Comparative Example 4: $Zr(PO_4)(NH_4 \cdot HPO_4) \cdot 2H_2O$

The results of gravimetric analysis of the zirconium phosphates of Example 5 and Comparative Example 2 are shown in Table 2.

[Table 2]

|  | Example 5 | Comparative Example 2 |
| --- | --- | --- |
| Zr (%) | 36.9 | 36.7 |
| P (%) | 20.1 | 18.5 |
| Na (%) | 4.6 | 4.0 |

In Examples 1 to 6 described above, the case where M1 and M2 are the same has been described. However, as described above, in the present invention, M1 and M2 may be the same as or different from each other.

Examples of a method in which M1 and M2 are made different include a method in which $NH_4$ corresponding to M1 of $(NH_4) Zr_2(NH_4PO_4)_{1.5}(PO_4)_2 \cdot 2H_2O$ obtained in Example 1 is exchanged for H or the like by ion exchange. Since M2 is usually in the lattice of the crystal, M2 remains as it is without being exchanged during ion exchange, and only M1 is ion-exchanged.

Another examples of a method in which M1 and M2 are made different from each other include a method in which lithium nitrate or silver nitrate is mixed with the zirconium phosphate powder obtained in Example 4, followed by firing, to replace H corresponding to M1 with Li or Ag, as in Examples 7 and 8 described above.

In Example 7 and Example 8, the method in which lithium nitrate or silver nitrate is mixed with the zirconium phosphate powder obtained in Example 4, followed by firing, to exchange H corresponding to M1 with Li or Ag has been described, but the present invention is not limited to this example. Alkali metals other than Li and Ag, that is, metal salts such as nitrates of Na, K, Rb, Cs, and Fr are mixed with the zirconium phosphate powder obtained in Example 4, followed by firing, whereby H corresponding to M1 can be exchanged with Na, K, Rb, Cs, or Fr.

[Evaluation of Dispersibility]

The zirconium phosphate prepared in each of Examples and Comparative Examples was dispersed in pure water. As a result, the following results were obtained. Whether or not the dispersion was possible was visually determined.

Example 1: Dispersible in pure water at a solid content concentration of 70 mass%
Example 2: Dispersible in pure water at a solid content concentration of 70 mass%
Example 3: Dispersible in pure water at a solid content concentration of 55 mass%
Example 4: Dispersible in pure water at a solid content concentration of 60 mass%
Example 5: Dispersible in pure water at a solid content concentration of 70 mass%
Example 6: Dispersible in pure water at a solid content concentration of 60 mass%
Example 7: Dispersible in pure water at a solid content concentration of 50 mass%
Example 8: Dispersible in pure water at a solid content concentration of 50 mass%
Comparative Example 1: Having lost fluidity at a solid content concentration of 60 mass%, and not dispersed in pure water. Dispersible in pure water at a solid content concentration of 50 mass%

Comparative Example 2: Dispersible in pure water at a solid content concentration of 60 mass%

Comparative Example 3: Having lost fluidity at a solid content concentration of 60 mass%, and not dispersed in pure water. Dispersible in pure water at a solid content concentration of 50 mass%

For Comparative Example 4, the value of the particle diameter $D_{10}$ is 4.72 $\mu$m, and particles exceeding 2.5 $\mu$m are present. Therefore, dispersibility and aggregation are not evaluated.

[Evaluation of Aggregation]

For each of Example 1, Example 2, and Example 5, a slurry in which a zirconium phosphate was dispersed in pure water at a solid content concentration of 70 mass% was prepared. Next, according to JIS-K5600-2-5, the sizes of particles (powder or powder aggregate) of the prepared slurry were evaluated using a particle gauge (manufactured by Hohsen Corporation, product name: Grindometer/large/2 grooves/0 to 25 $\mu$m). As a result, no linear mark was present at a place of 2.5 $\mu$m or more. This result means that aggregates with a particle size exceeding 2.5 $\mu$m are not present in the slurry.

For each of Examples 4 and 6, a slurry in which a zirconium phosphate was dispersed in pure water at a solid content concentration of 60 mass% was prepared. For these slurries, the sizes of particles (powder or powder aggregate) of the prepared slurry were evaluated using a particle gauge according to JIS-K5600-2-5 in the same manner as described above. As a result, no linear mark was present at a place of 2.5 $\mu$m or more.

For each of Examples 7 and 8, a slurry in which a zirconium phosphate was dispersed in pure water at a solid content concentration of 50 mass% was prepared. For these slurries, the sizes of particles (powder or powder aggregate) of the prepared slurry were evaluated using a particle gauge according to JIS-K5600-2-5 in the same manner as described above. As a result, no linear mark was present at a place of 2.5 $\mu$m or more.

For Example 3, a slurry in which a zirconium phosphate was dispersed in pure water at a solid content concentration of 55 mass% was prepared. For the slurry, the sizes of particles (powder or powder aggregate) of the prepared slurry were evaluated using a particle gauge according to JIS-K5600-2-5 in the same manner as described above. As a result, no linear mark was present at a place of 2.5 $\mu$m or more.

The fact that no linear mark is present at a place of 2.5 $\mu$m or more in each of the slurries having solid content concentrations of 70, 60, and 55 mass% naturally means that no linear mark is present at a place of 2.5 $\mu$m or less when the same evaluation is performed in the slurry having a solid content concentration of 50 mass%.

For each of Comparative Examples 1 and 3, a slurry in which a zirconium phosphate was dispersed in pure water at a solid content concentration of 50 mass% was prepared. For these slurries, the sizes of particles (powder or powder aggregate) of the prepared slurry were evaluated using a particle gauge according to JIS-K5600-2-5 in the same manner as described above. As a result, a linear mark was observed at a place exceeding 2.5 $\mu$m. This result means that aggregates with a particle size exceeding 2.5 $\mu$m are present in the slurry.

For Comparative Example 2, a slurry in which a zirconium phosphate was dispersed in pure water at a solid content concentration of 50 mass% was prepared. For the slurry, the sizes of particles (powder or powder aggregate) of the prepared slurry were evaluated using a particle gauge according to JIS-K5600-2-5 in the same manner as described above. As a result, a linear mark was observed at a place exceeding 2.5 $\mu$m.

**Claims**

1. A zirconium phosphate represented by the following formula [1]:

$$M1Zr_2(M2PO_4)_a(PO_4)_b \cdot nH_2O \qquad [1]$$

wherein:

M1 and M2 are monovalent cations, and may be the same or different from each other;

a and b are numbers satisfying $0.3 < a \leq 1.8$, $3.1 \leq (a + b) \leq 3.6$, and $2a + 3b = 9$; and

n is a number satisfying $0 \leq n \leq 2$.

2. The zirconium phosphate according to claim 1, comprising a rhombohedral crystal as a crystal structure, wherein a proportion of the rhombohedral crystal is more than 90% with respect to the entire zirconium phosphate.

3. The zirconium phosphate according to claim 1 or 2, wherein the zirconium phosphate has a particle diameter $D_{90}$ of 1.5 $\mu$m or less.

4. The zirconium phosphate according to any one of claims 1 to 3, wherein a difference between the particle diameter $D_{90}$ and a particle diameter $D_{10}$ is 1 $\mu$m or less.

5. The zirconium phosphate according to any one of claims 1 to 4, wherein a difference between the particle diameter $D_{90}$ and a particle diameter $D_{10}$ is 0.05 $\mu$m or more.

6. The zirconium phosphate according to any one of claims 1 to 5, wherein when the zirconium phosphate is dispersed at a solid content concentration of 50 mass% in pure water for measurement with a particle gauge, no linear mark is present at a place of 2.5 $\mu$m or more.

7. A slurry comprising:

an aqueous solvent; and
the zirconium phosphate according to any one of claims 1 to 6 dispersed in the aqueous solvent.

8. The slurry according to claim 7, wherein:

the zirconium phosphate is dispersed at a solid content concentration of 50 mass% or more in the aqueous solvent; and
the slurry has no linear mark at a place of 2.5 $\mu$m or more as measured by a particle gauge.

Fig.1

# EP 4 005 975 A1

## INTERNATIONAL SEARCH REPORT

| | International application No. |
|---|---|
| | PCT/JP2020/047119 |

A. CLASSIFICATION OF SUBJECT MATTER
C01B 25/37(2006.01)i; C01B 25/45(2006.01)i
FI: C01B25/37 K; C01B25/45 H

According to International Patent Classification (IPC) or to both national classification and IPC

B. FIELDS SEARCHED

Minimum documentation searched (classification system followed by classification symbols)
C01B25/37; C01B25/45

| Documentation searched other than minimum documentation to the extent that such documents are included in the fields searched | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)
CAplus/REGISTRY (STN); JSTPlus/JST7580/JSTChina (JDreamIII)

C. DOCUMENTS CONSIDERED TO BE RELEVANT

| Category* | Citation of document, with indication, where appropriate, of the relevant passages | Relevant to claim No. |
|---|---|---|
| X | WO 2006/118159 A1 (TOAGOSEI CO., LTD.) 09 November 2006 (2006-11-09) paragraphs [0037], [0041], [0042], table 1, examples 2, 3 | 1-8 |
| X | JP 2006-306676 A (TOAGOSEI CO., LTD.) 09 November 2006 (2006-11-09) paragraphs [0027], [0028], [0040], [0041], table 1, examples 2, 3 | 1-8 |
| X | JP 2006-306677 A (TOAGOSEI CO., LTD.) 09 November 2006 (2006-11-09) paragraphs [0025], [0026], [0038], [0040], table 1, examples 2, 3 | 1-8 |
| X | High Temperatures-High Pressures, 2002, vol. 34, pp. 315-322 abstract, table 2 | 1, 2 |

☐ Further documents are listed in the continuation of Box C.  ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 08 February 2021 (08.02.2021) | 02 March 2021 (02.03.2021) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**
Information on patent family members

| International application No. |
| --- |
| PCT/JP2020/047119 |

| Patent Documents referred in the Report | Publication Date | Patent Family | Publication Date |
| --- | --- | --- | --- |
| WO 2006/118159 A1 | 09 Nov. 2006 | US 2009/0068283 A1 paragraphs [0056], [0063], [0064], table 1, examples 2, 3 EP 1878346 A1 CN 101166422 A KR 10-2008-0009139 A | |
| JP 2006-306676 A | 09 Nov. 2006 | (Family: none) | |
| JP 2006-306677 A | 09 Nov. 2006 | (Family: none) | |

Form PCT/ISA/210 (patent family annex) (January 2015)

**EP 4 005 975 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6048713 A
- JP 5017112 A
- JP 60239313 A
- JP 2006306677 A